# EUROPÄISCHE PATENTSCHRIFT

(11) **EP 2 322 370 B1**
(45) Veröffentlichungstag und Bekanntmachung des Hinweises auf die Patenterteilung: **19.12.2012**
(21) Anmeldenummer: 10013913.8
(22) Anmeldetag: 23.10.2010
(51) Int. Cl.: B60J 7/20

(54) **Fixierungssystem für einen Verdeckkastendeckel**
Fixing system for the cover of a roof storage compartment
Système de fixation pour un couvercle de coffre de capote

(30) Priorität: 11.11.2009 DE 102009052796
(43) Veröffentlichungstag der Anmeldung: 18.05.2011
(73) Patentinhaber: AUDI AG, 85045 Ingolstadt (DE)
(72) Erfinder: Mangold, Artur, Dipl.-Ing., 72172 Sulz (DE); Vogt, Dirk, Dipl.-Ing., 70619 Stuttgart (DE); Horch, Rudolf, 71404 Korb (DE)
(74) Vertreter: Engelhardt, Harald

(56) Entgegenhaltungen:
- FR-A1- 2 923 756
- US-B2- 6 866 327

## Beschreibung

Die Erfindung bezieht sich auf ein Fixierungssystem für einen Verdeckkastendeckel eines mit einem Faltverdeck ausgestatteten Personenkraftwagens, nach dem Oberbegriff des Patentanspruchs 1.

Aus der FR 29 23 756 A ist ein gattungsgemäßes Fixierungssystem bekannt. Das bekannte Fixierungssystem ist zwischen dem Verdeckkastendeckel und einem feststehenden Strukturelement des Aufbaus wirksam, wobei das Fixierungssystem den Verdeckkastendeckel quer zur Fahrzeuglängsrichtung lagebestimmend ausrichtet und wenigstens ein aufrechtes Gleitelement am Verdeckkastendeckel sowie eine korrespondierende Einführungsstütze am Strukturelement besitzt, mit der das Gleitelement in Wirkverbindung steht.

Es ist ein Faltverdeck für einen Personenkraftwagen bekannt, DE 198 00 156 A1, das von einer Schließstellung in eine Offenstellung bewegbar ist und vice versa. In der Offenstellung ist das Faltverdeck in einem Verdeckkasten abgelegt, der mittels eines Verdeckkastendeckels verschlossen ist. Der Verdeckkastendeckel ist von einer abgesenkten Abdeckstellung in eine aufgestellte Aufnahmestellung bewegbar. Zur Bewegung des Verdeckkastendeckels dient ein Hebelwerk, das nach Art eines Viergelenks ausgebildet ist und je Längsseite einen vorderen Hebel und einem hinteren Hebel umfasst; letztere sind am Verdeckkastendeckel und am Aufbau angelenkt.

Die US 6,866,327 B2 befasst sich mit einem Verdeckkastendeckel eines mit einem Faltverdeck ausgestatten Fahrzeugs. Das Faltverdeck ist in einen Verdeckkasten absenkbar, und der Verdeckkastendeckel ist unter Vermittlung eines Lenkersystems in eine erste Stellung zur Aufnahme des Faltverdecks und in eine zweite Stellung zur Be- und Entladung von Gepäckstücken verlagerbar. In einem -in Fahrtrichtung betrachtet- vorderen Bereich des Verdeckkastendeckels ist ein Fixierungssystem angebracht, das eine am Aufbau vorgesehene, nach Art einer Kulissenführung ausgeführte Aufnahme und einen am Verdeckkastendeckel angeordneten Gleitzapfen aufweist, der mit der Aufnahme zusammenarbeitet.

Aus der DE 10 2004 038 433 A1 geht ein Verdeckkastendeckei für Kraftfahrzeuge hervor, der einem Aufnahmeraum zur Unterbringung eines geöffneten Klappverdecks zugeordnet ist. Am Verdeckkastendeckel ist ein Niederhalter mit einer Anlaufbahn und einer Stützbahn befestigt. Anlaufbahn und Stützbahn kooperieren mit einem Zentrierstift des Klappverdecks.

Es ist Aufgabe der Erfindung, ein Fixierungssystem für einen Verdeckkastendeckel eines Personenkraftwagens zu konzipieren, das quer zur Fahrzeuglängsrichtung wirksam ist und sich durch gute Funktion und leichte Realisierbarkeit auszeichnet. Dabei sollte aber sichergestellt werden, dass etwaige Fertigungstoleranzen mit vertretbaren Mitteln ausgleichbar sind.

Die mit der Erfindung hauptsächlich erzielten Vorteile sind darin zu sehen, dass das Fixierungssystem den Verdeckkastendeckel quer zur Fahrzeuglängsrichtung gezielt ausrichtet. Dies wird vor allem durch das Gleitelement und die Einführungsstütze -beide mit geringem Aufwand darstellbar- der Fixierungsvorrichtungen ermöglicht, welche Fixierungsvorrichtungen bewirken, dass der Verdeckkastendeckel in seiner Abdeckstellung eine konstruktiv festgelegte Lage funktionsgerecht einnimmt. Die Einführungsstütze einer jeden Fixierungsvorrichtung ist auf einfache Weise an einem hochfesten Strukturelement des Aufbaus vorgesehen, das aus einem Guss aus Metall hergestellt sein kann, wobei es sich dann um eine musterhafte Ausführung handelt, wenn die Einführungsstütze aus einem Stück mit dem Strukturelement hergestellt ist. Das Gleitelement der Fixierungsvorrichtung ist mit einer Haltvorrichtung vorbildlich vereinigt, die sich ohne weiteres an einer Innenwandstruktur des Verdeckkastendeckels anordnen lässt. Um Fertigungsgegebenheiten Rechnung zu tragen, sind an der Fixierungsvorrichtung Vorkehrungen getroffen, über die das Gleitelement und die Lagerplatte zum Toleranzausgleich quer zur Fahrzeuglängsrichtung verstellbar sind. Hierzu sind in der Lagerplatte Schlitzöffnungen für Schrauben und eine Exzenterscheibe vorgesehen, die aufwandsarm darstellbar sind. Mittels der Exzenterscheibe lassen sich etwa erforderliche Einstellmaßnahmen des Gleitelements vorzüglich vornehmen. Schließlich ist das Gleitelement von der Verkleidungskappe aus umgeben, die ein geräuscharmes Zusammenwirken des Gleitelements mit der Einführungsstütze ermöglicht.

In der Zeichnung wird ein Ausführungsbeispiel der Erfindung gezeigt, das nachstehend näher erläutert wird.

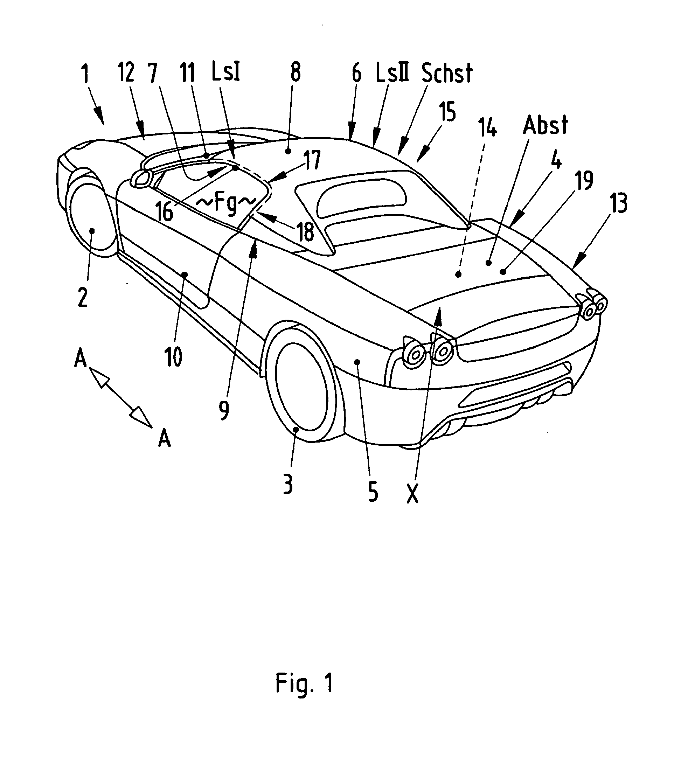

Es zeigen
Fig. 1 eine Schrägansicht von hinten links oben auf einen Personenkraftwagen mit einem Faltverdeck und einem Verdeckkasten,
Fig. 2 eine Einzelheit X der Fig. 1 in größerem Maßstab,
Fig. 3 eine Teilansicht eines rückwärtigen Bereichs der Fig. 2 in größerem Maßstab, und zwar mit einem schematisch angedeuteten Fixierungssystem eines Verdeckkastendeckels,
Fig. 4 eine Schrägansicht von vorne links auf eine Fixierungsvorrichtung des Fixierungssystems nach Fig. 3,
Fig. 5 eine Einzelheit Y der Fig. 4 in größerem Maßstab,
Fig. 6 einen Schnitt etwa nach der Linie VI-VI der Fig. 5 in größerem Maßstab,
Fig. 7 eine Ansicht von unten auf die Fixierungsvorrichtung einer Nulllage einer Exzenterscheibe,
Fig. 8 eine Ansicht entsprechend Fig. 7, jedoch die Exzenterscheibe in einer ersten Verstelllage,
Fig. 9 eine Ansicht entsprechend Fig. 7, jedoch die Exzenterscheibe in einer zweiten Verstelllage.

Ein Personenkraftwagen 1 umfasst einen von Rädern 2 und 3 getragenen Aufbau 4, der einen Grundkörper 5 und ein Faltverdeck 6 mit Verdeckgestänge 7, Verdeckbezug 8 und Innenerkleidung -nicht dargestellt- aufweist. Etwa an einer Gürtellinie 9 stoßen das Faltverdeck 6 und der Grundkörper 5 zusammen, der Türen 10, einen Windschutzscheibenrahmen 11, einen Bug 12 sowie ein Heck 13 besitzt.

Das Faltverdeck 6 ist zwischen einer einen Fahrgastraum Fg überspannenden Schließstellung Schst und einer in einem Verdeckkasten 14 im Heck 13 abgelegten Offenstellung -nicht gezeigt- bewegbar. Im Dachbereich 15 des Faltverdecks 6 ist das Verdeckgestänge 7 mit einem in Fahrzeuglängsrichtung A-A verlaufenden Lenkersystem 16 versehen, das an Längsseiten Lsl und Lsll einander zugekehrte erste vordere Dachlenker 17 und zweite hintere Dachlenker 18 umfasst, welche Dachlenker 17 und 18 relativbeweglich zueinander ausgebildet sind.

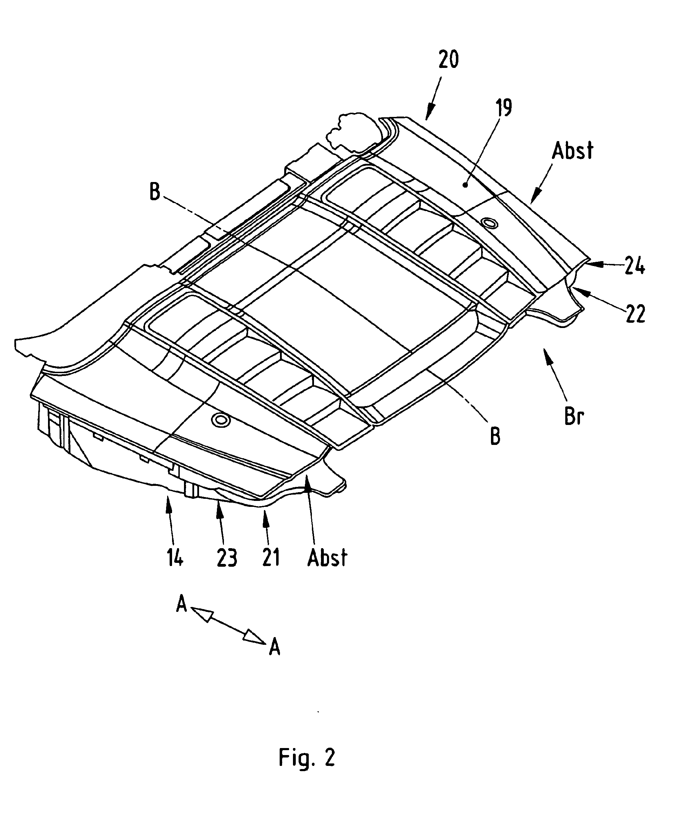

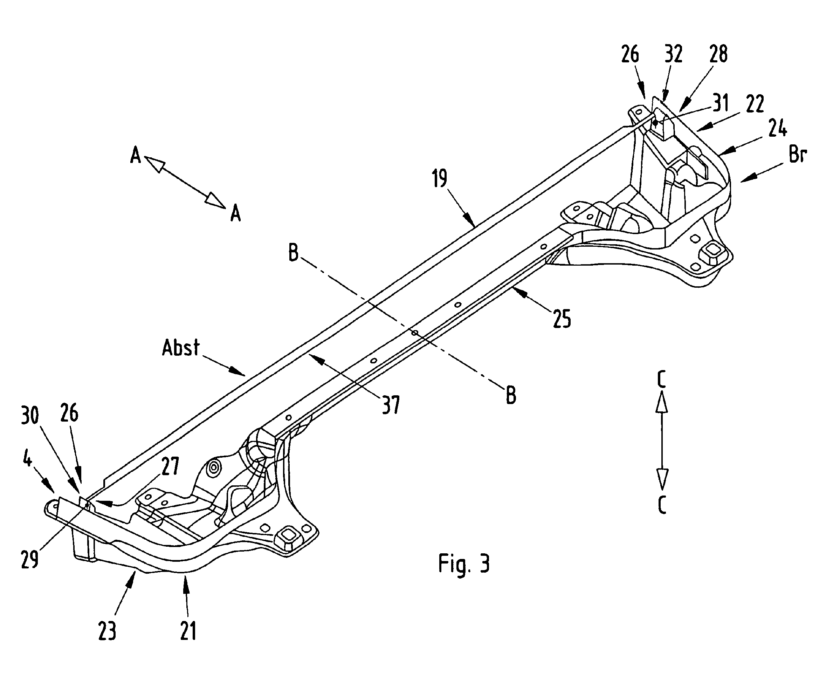

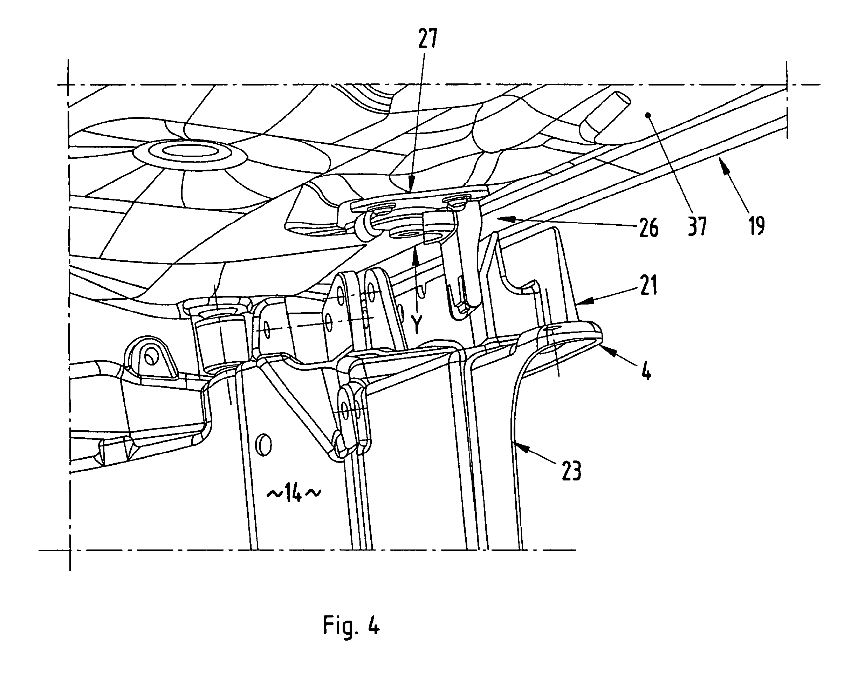

Der Verdeckkasten 14 wird mittels eines Verdeckkastendeckels 19 verschlossen, der zwischen einer Abdeckstellung Abst und einer Aufnahmestellung -nicht gezeigt- für das Faltverdeck 6 bewegbar ist. Im Ausführungsbeispiel bilden der Verdeckkasten 14, der Verdecklastendeckel 19 mit einem nicht dargestellten Scharniersystem und das Faltverdeck 6 eine modulartige Baueinheit 20 -Fig. 2, die außerhalb des Personenkraftwagens 1 vormontiert und im zusammengebauten Zustand in den Aufbau 4 eingesetzt und danach mit letzterem vereinigt wird. In einem rückwärtigen Bereich Br des Verdeckkastens 14 sind beiderseits einer Längsmittelebene B-B des Personenkraftwagens 1 hochfeste Eckelemente 21 und 22 -Fig. 2 und 3- angeordnet, die nach Art von z.B. aus Guss -z.B. aus Leichtmetall- hergestellten Strukturelementen 23 und 24 fest mit dem Aufbau 4 verbunden sind. Die Strukturelemente 23 und 24 sind mittels eines Querträges 25 -Fig. 4- abgestützt, der Druck-, Zug- und Torsionskräfte aufnimmt.

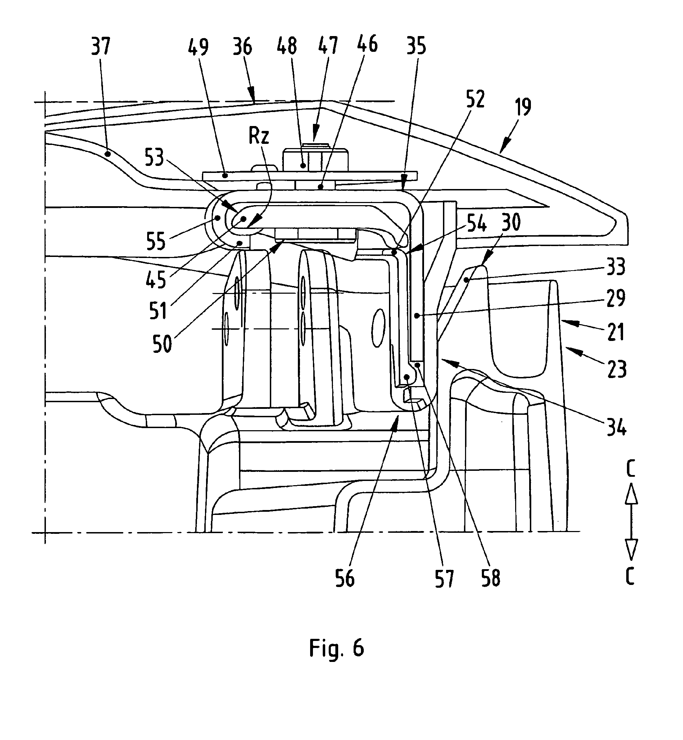

Der Verdeckkastendeckel 19 wird in der Abdeckstellung Abst unter Vermittlung eines Fixierungssystems 26 ausgerichtet, und zwar quer zur Fahrzeuglängsrichtung A-A. Hierzu ist das Fixierungssystem 26 beiderseits der Längsmittelebene B-B mit Fixierungsvorrichtungen 27 und 28 versehen -in Fig. 3 schematisch dargestellt-, die zwischen Verdeckkastendeckel 19 und den Strukturelementen 23 und 24 wirksam sind. Jede Fixierungsvorrichtung -z.B. 27- umfasst ein aufrechtes mit dem Verdeckkastendeckel 19 verbundenes Gleitelement 29 und eine am benachbarten Strukturelement 23 in Lage gehaltene Einführungsstütze 30 -Fig.6, die Fixierungsvorrichtung 28 besitzt ein Gleitelement 31 und eine Einführungsstütze 32.

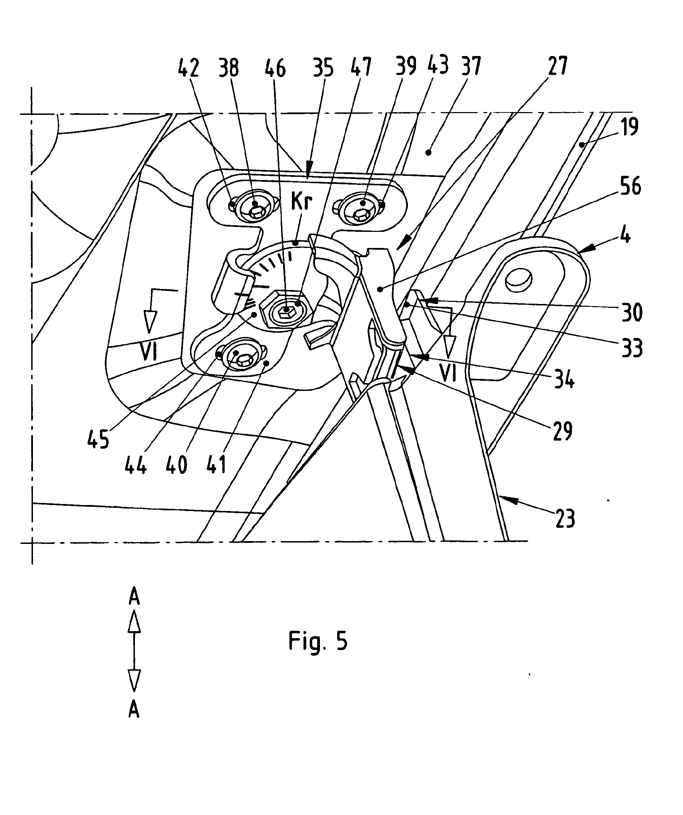

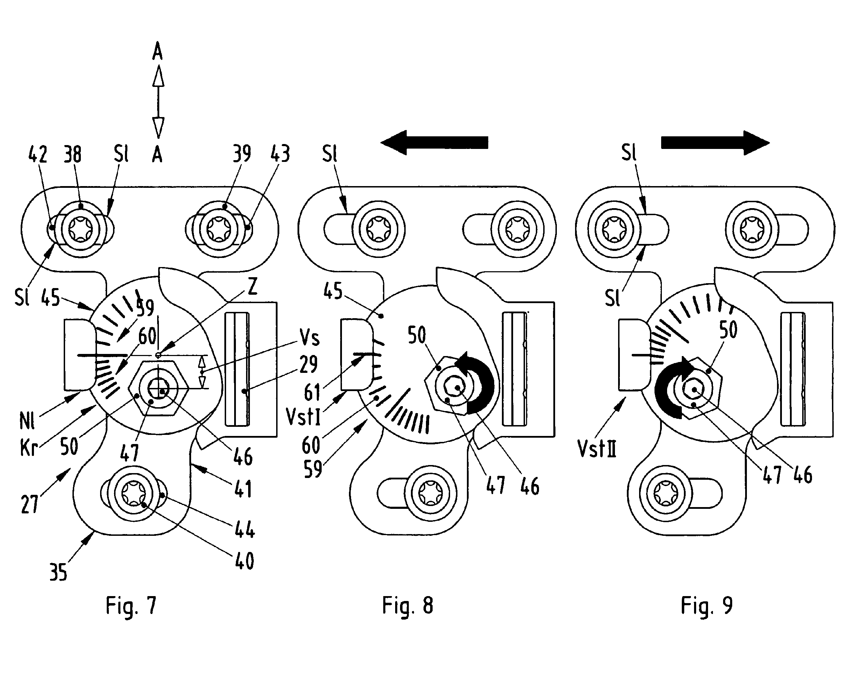

In Fahrzeughöhenrichtung C-C betrachtet weist die Einführungsstütze 30 (siehe Figur 5) eine erste obere schräge Anlaufbahn 33 und eine zweite untere senkrechte Stützbahn 34 auf. Die Einführungsstütze 30 ist aus einem Stück mit dem Eckelement 21 bzw. Strukturelement 23 hergestellt. Das Gleitelement 29 ist baulich mit einer Halteeinrichtung 35 vereinigt, die an einer innerhalb einer Außenwand 36 des Verdeckkastendeckels 19 liegenden rahmenartigen Innenwandstruktur 37 angeordnet ist. Die Halteeinrichtung 35 weist eine über Schrauben 38, 39 und 40 -Fig. 5; 7 bis 9- mit der Innenwandstruktur 37 verbundene Lagerplatte 41 auf. Die Lagerplatte 41 ist mit Schlitzöffnungen 42, 43 und 45 -Fig. 5 und 7- versehen, deren längere Seiten SI -Fig. 7, 8 und 9- quer zur Fahrzeuglängsrichtung A-A ausgerichtet sind.

An der Lagerplatte 41 ist eine Exzenterscheibe 45 vorgesehen, über die das Gleitelement 29 und die mit letzterem aus einem Stück hergestellte Lagerplatte 41 quer zur Fahrzeuglängsrichtung A-A verstellbar ist. Die Exzenterscheibe 45 wird von einem Kreis Kr begrenzt, und ein Lagerzapfen 46 der Exzenterscheibe 45 ist mit einem Versatz Vs zu einem Zentrum Z des Kreises Kr angeordnet. Der Lagerzapfen 46 weißt ein Gewindebolzen 48 auf, der die Lagerplatte 41 durchdringt und in einem Gewinde in einer Tragkonsole 49 -Fig. 6- der Innenwandstruktur 37 ruht. Zur Betätigung der Exzenterscheibe 45 ist an letzterer ein schraubenmutterartiger Sechskant 50 vorgesehen, der aus einem Stück mit besagter Exzenterscheibe 45 gefertigt ist.

Die Exzenterscheibe 45 wird in axialer Richtung des Lagerzapfens 46 bzw. des Zentrums Z mit einem ersten Stützschenkel 51 und einem zweiten Stützschenkel 52 -Fig. 6- begrenzt. Die Stützschenkel 51 und 52 sind an gegenüberliegenden Seiten 53 und 54 des Umfangs des Kreises Kr angeordnet. Der erste Stützschenkel 51 ist an einem U-förmigen Lagerplattenabschnitt 55 angeformt, der eine Randzone Rz der Exzenterscheibe 45 umgreift. Der zweite Stützschenkel 52 ist Teil einer Geräusche dämmenden Verkleidungskappe 56 aus Kunststoff, die das stegartige Gleitelement 29 umgibt und mit der Anlaufbahn 33 sowie der Stützbahn 34 zusammenwirkt. In die Verkleidungskappe 56 ist ein federndes Eingriffelement 57 integriert, das in eine Ausnehmung 58 des Gleitelements 29 eingerückt ist, dergestalt, dass die Verkleidungskappe 56 am Gleitelement 29 gehalten wird.

An der sichtbaren Seite der Exzenterscheibe 45 und dem ersten Stützschenkel 51 ist ein Nonius 59 -Fig. 7, 8 und 9- vorgesehen, der eine Skala 60 an der Exzenterscheibe 45 und einen Einstellbalken 61 an dem ersten Stützschenkel 51 umfasst. Schließlich werden in den Figuren 7, 8 sowie 9 einerseits eine Nulllage NI -Fig. 7- und andererseits eine erste Verstelllage Vstl -Fig. 8- bzw. eine zweite Verstelllage -Fig. 9- der Lagerplatte 41 und des Gleitelements 29 wiedergegeben.

## Patentansprüche

1. Fixierungssystem für einen Verdeckkastendeckel (19) eines mit einem Faltverdeck (6) ausgestatteten Personenkraftwagens (1), welches Fixierungssystem (26) im eingebauten Zustand des Verdeckkastendeckels zwischen dem Verdeckkastendeckel (19) und einem feststehenden Strukturelement (23, 24) des Fahrzeug Aufbaus (4) wirksam ist, wobei das Fixierungssystem (26) den Verdeckkastendeckel (19) quer zur Fahrzeuglängsrichtung (A-A) lagebestimmend ausrichtet und wenigstens ein aufrechtes Gleitelement (29, 31) am Verdeckkastendeckel (19) sowie eine korrespondierende Einführungsstütze (30, 31) am Strukturelement (23, 24) besitzt, mit der das Gleitelement (29, 31) in Wirkverbindung steht, **dadurch gekennzeichnet, dass** das Gleitelement (29, 31) mit einer Lagerplatte (41) vereinigt ist, die über Schrauben (38, 39, 40) mit einer Innenwandstruktur (37) des Verdeckkastendeckels (19) verbinder ist, wobei die Schrauben (38, 39, 40) quer zur Fahrzeuglängsrichtung (A-A) verlaufende Schlitzöffnungen (42, 43, 44) in der Lagerplatte (41) durchdringen, der eine drehbare Exzenterscheibe (45) zugeordnet ist, über welche Exzenterscheibe (45) die Lagerplatte (41) mit dem Gleitelement (29, 31) quer zur Fahrzeuglängsrichtung (A-A) verstellbar sind.

2. Fixierungssystem nach Anspruch 1, **dadurch gekennzeichnet, dass** das Fixierungssystem (26) beiderseits einer Längsmittelebene (B-B) des Personenkraftwagens (1) Fixierungsvorrichtungen (27 und 28) aufweist, wovon jede Fixierungsvorrichtung (27 oder 28) ein solches Gleitelement (29, 31) und eine solche Einführungsstütze (30, 31) umfasst.

3. Fixierungssystem nach Anspruch 2, **dadurch gekennzeichnet, dass** jede Einführungsstütze (30, 31) des Strukturelements (23, 31) -in Fahrzeughöhenrichtung (C-C) betrachtet- eine erste obere schräge Anlaufbahn (33) und eine zweite untere senkrechte Stützbahn (34) umfasst.

4. Fixierungssystem nach den Ansprüchen 1 und 3, **dadurch gekennzeichnet, dass** die Einführungsstütze (30, 31) aus einem Stück mit dem Strukturelement (23, 24) des Aufbaus (4) verbunden ist.

5. Fixierungssystem nach einem oder mehreren der vorangehenden Ansprüche, **dadurch gekennzeichnet, dass** die Exzenterscheibe (45) von einem Kreis (Kr) begrenzt wird, wobei ein Lagerzapfen (46) der Exzenterscheibe (45) versetzt zu einem Zentrum (Z) des Kreises (Kr) angeordnet ist.

6. Fixierungssystem nach Anspruch 5, **dadurch gekennzeichnet, dass** der Lagerzapfen (46) mit einem Gewindebolzen (48) die Lagerplatte (41) durchdringt und mit einem Gewinde in einer Tragkonsole (49) der Innenwandstruktur (37) ruht.

7. Fixierungssystem nach den Ansprüchen 5 und 6, **dadurch gekennzeichnet, dass** der Lagerzapfen (46) von einem schraubenmutterartigen Sechskant (50) umgeben ist, der Bestandteil der Exzenterscheibe (45) ist.

8. Fixierungssystem nach einem oder mehreren der vorangehenden Ansprüche, **dadurch gekennzeichnet, dass** die Exzenterscheibe (45) in axialer Richtung des Lagerzapfens (46) mittels eines ersten Stützschenkels (51) und eines zweiten Stützschenkels (52) begrenzt wird, welche Stützschenkel (51 und 52) an gegenüberliegenden Seiten (53 und 54) der Exzenterscheibe (45) angeordnet sind.

9. Fixierungssystem nach Anspruch 8, **dadurch gekennzeichnet, dass** der erste Stützschenkel (51) an einem U-förmigen Lagerplattenabschnitt (55) vorgesehen ist, der eine Randzone (Rz) der Exzenterscheibe (45) umgreift.

10. Fixierungssystem nach den Ansprüchen 3 und 9, **dadurch gekennzeichnet, dass** der zweite Stützschenkel (52) Teil einer Verkleidungskappe (56) ist, die das Gleitelement (29, 31) zumindest abschnittsweise umgibt und mit der Anlaufbahn (33) sowie der Stützbahn (34) zusammenarbeitet.

11. Fixierungssystem nach Anspruch 10, **dadurch gekennzeichnet, dass** die Verkleidungskappe (56) mit einem federnden Eingriffelement (57) in eine Ausnehmung (58) des Gleitelements (29; 31) zur Halterung der Verkleidungskappe (56) am Gleitelement (29, 31) eingerückt ist.

12. Fixierungssystem nach Anspruch 8, **dadurch gekennzeichnet, dass** an der Exzenterscheibe (45) und dem ersten Stützschenkel (51) ein Nonius (59) vorgesehen ist, der durch eine Skala (60) an der Exzenterscheibe (45) und einem Einstellbalken (61) am ersten Stützschenkel (51) gebildet wird.

## Claims

1. Fixing system for a folding-top compartment lid (19) of a passenger vehicle (1) equipped with a folding top (6), which fixing system (26) is operative between the folding-top compartment lid (19) and a stationary structural element (23, 24) of the vehicle body (4) once the folding-top compartment lid is fitted, the fixing system (26) orienting the folding-top compartment lid (19) to fix it in position transversely to the longitudinal direction of the vehicle (A-A) and having at least one vertical sliding element (29, 31) on the folding-top compartment lid (19) and a corresponding insertion bracket (30, 31) on the structural element (23, 24), which bracket is operatively connected to the sliding element (29, 31), **characterised in that** the sliding element (29, 31) is joined to a bearing plate (41), which can be connected via screws (38, 39, 40) to an internal wall structure (37) of the folding-top compartment lid (19), the screws (38, 39, 40) penetrating slot openings (42, 43, 44), which extend transversely to the longitudinal direction (A-A) of the vehicle, in the bearing plate (41), to which a rotatable eccentric disc (45) is allocated, via which eccentric disc (45) the bearing plate (41) having the sliding element (29, 31) can be adjusted transversely to the longitudinal direction (A-A) of the vehicle.

2. Fixing system according to claim 1, **characterised in that** the fixing system (26) comprises fixing devices (27 and 28) on both sides of a longitudinal centre plane (B-B) of the passenger vehicle (1), each fixing device (27 or 28) comprising a sliding element of this type (29, 31) and an insertion bracket (30, 31) of this type.

3. Fixing system according to claim 2, **characterised in that** each insertion bracket (30, 31) of the structural element (23, 31) comprises a first upper oblique run-on web (33) and a second lower perpendicular supporting web (34) when viewed in the height direction of the vehicle (C-C).

4. Fixing system according to claim 1 and claim 3, **characterised in that** the insertion bracket (30, 31) is integrally connected to the structural element (23, 24) of the body (4).

5. Fixing system according to any one of more of the preceding claims, **characterised in that** the eccentric disc (45) is delimited by a circle (Kr), a journal (46) of the eccentric disc (45) being arranged offset from a centre (Z) of the circle (Kr).

6. Fixing system according to claim 5, **characterised in that** the journal (46) penetrates the bearing plate (41) by means of a stud bolt (48) and rests in a support bracket (49) of the internal wall structure (37) by means of a thread.

7. Fixing system according to claim 5 and claim 6, **characterised in that** the journal (46) is surrounded by a nut-shaped hexagonal collar (50), which is a component of the eccentric disc (45).

8. Fixing system according to one of more of the preceding claims, **characterised in that** the eccentric disc (45) is delimited in the axial direction of the journal (46) by means of a first supporting arm (51) and a second supporting arm (52), which supporting arms (51 and 52) are arranged on opposite sides (53 and 54) of the eccentric disc (45).

9. Fixing system according to claim 8, **characterised in that** the first supporting arm (51) is provided on a U-shaped portion of the bearing plate (55), which encompasses an edge region (Rz) of the eccentric disc (45).

10. Fixing system according to claim 3 and claim 9, **characterised in that** the second supporting arm (52) is part of a cover cap (56) which surrounds at least a portion of the sliding element (29, 31) and cooperates with the run-on web (33) and the supporting web (34) of the insertion bracket.

11. Fixing system according to claim 10, **characterised in that** the cover cap (56) comprising a resilient engagement element (57) is pressed into a recess (58) of the sliding element (29; 31) to hold the cover cap (56) on the sliding element (29,31).

12. Fixing system according to claim 8, **characterised in that** a vernier (59) is provided on the eccentric disc (45) and the first supporting arm (51) and is formed by a scale (60) on the eccentric disc (45) and an adjusting bar (61) on the first supporting arm (51).

## Revendications

1. Système de fixation pour un couvercle de coffre de capote (19) d'une voiture particulière (1) équipée d'une capote repliable (6), lequel système de fixation (26) opère entre le couvercle de coffre de capote (19) et un élément de structure fixe (23, 24) de la carrosserie (4), dans lequel le système de fixation (26) oriente le couvercle de coffre de capote (19) transversalement à la direction longitudinale (A-A) du véhicule pour en déterminer la position et possède au moins un élément coulissant droit (29, 31) sur le couvercle de coffre de capote (19) ainsi qu'un appui d'entrée correspondant (30, 31) sur l'élément de structure (23, 24), avec lequel l'élément coulissant (29, 31) coopère, **caractérisé en ce que** l'élément coulissant (29, 31) est assemblé avec une plaque d'appui (41) qui peut être reliée via des vis (38, 39, 40) avec une structure de paroi interne (37) du couvercle de coffre de capote (19), dans lequel les vis (38, 39, 40) pénètrent dans des ouvertures en fente (42, 43, 44) s'étendant transversalement à la direction longitudinale (A-A) du véhicule dans la plaque d'appui (41), à laquelle est affecté un disque d'excentrique rotatif (45), via lequel disque d'excentrique (45) la plaque d'appui (41) peut être déplacée avec l'élément coulissant (29, 31) transversalement à la direction longitudinale (A-A) de la voiture.

2. Système de fixation selon la revendication 1, **caractérisé en ce que** le système de fixation (26) présente des deux côtés d'un plan central longitudinal (B-B) de la voiture personnelle (1) des dispositifs de fixation (27 et 28), dont chaque dispositif de fixation (27 ou 28) comprend un tel élément coulissant (29, 31) et un tel appui d'entrée (30, 31).

3. Système de fixation selon la revendication 2, **caractérisé en ce que** chaque appui de fixation (30, 31) de l'élément de structure (23, 31) - en considérant la direction longitudinale (C-C) du véhicule - une première voie de roulement supérieure oblique (33) et une seconde voie d'appui inférieure verticale (34).

4. Système de fixation selon les revendications 1 et 3, **caractérisé en ce que** l'appui d'entrée (30, 31) est assemblé d'un seul tenant avec l'élément de structure (23, 24) de la carrosserie (4).

5. Système de fixation selon une ou plusieurs des revendications précédentes, **caractérisé en ce que** le disque d'excentrique (15) est délimité par un cercle (Kr), dans lequel un tourillon (46) du disque d'excentrique (45) est agencé décalé vers un centre (Z) du cercle (Kr).

6. Système de fixation selon la revendication 5, **caractérisé en ce que** le tourillon (46) traverse la plaque d'appui (41) avec un boulon fileté (48) et s'appuie par un filet dans une console porteuse (49) de la structure de paroi interne (37).

7. Système de fixation selon les revendications 5 et 6, **caractérisé en ce que** le tourillon (46) est entouré par un élément hexagonal (50) du type écrou, qui fait partie du disque d'excentrique (45).

8. Système de fixation selon une ou plusieurs des revendications précédentes, **caractérisé en ce que** le disque d'excentrique (45) est délimité dans la direction axiale du tourillon (46) au moyen d'une première branche d'appui (51) et d'une seconde branche d'appui (52), lesdites branches d'appui (51 et 52) étant aménagées sur les côtés opposés (53 et 54) du disque d'excentrique (45).

9. Système de fixation selon la revendication 8, **caractérisé en ce que** la première branche d'appui (51) est prévue sur une section de plaque d'appui (55) en forme de U, qui enserre une zone marginale (Rz) du disque d'excentrique (45).

10. Système de fixation selon les revendications 3 et 9, **caractérisé en ce que** la seconde branche d'appui (52) fait partie d'un coffre de capotage (56), qui entoure l'élément coulissant (29, 31) au moins par sections et coopère avec la voie de roulement (33) ainsi qu'avec la voie d'appui (34).

11. Système de fixation selon la revendication 10, **caractérisé en ce que** le coffre de capotage (56) est enfoncé avec un élément d'engagement élastique (57) dans un évidement (56) de l'élément coulissant (29 ; 31) pour maintenir le coffre de capotage (56) sur l'élément coulissant (29, 31).

12. Système de fixation selon la revendication 8, **caractérisé en ce qu'**il est prévu sur le disque d'excentrique (45) et la première branche d'appui (51) un vernier (59) qui est formé par une échelle sur le disque d'excentrique (45) et un fléau de réglage (61) formé sur la première branche d'appui (51).
